# EUROPEAN PATENT SPECIFICATION

(11) **EP 3 613 610 B1**
(45) Date of publication and mention of the grant of the patent: **13.09.2023**
(21) Application number: 19190347.5
(22) Date of filing: 06.08.2019
(51) Int. Cl.: B60C 1/00, C08L 7/00

(54) **RUBBER COMPOSITION FOR TIRE TREAD AND TIRE MANUFACTURED BY USING THE SAME**
KAUTSCHUKZUSAMMENSETZUNG FÜR REIFENLAUFFLÄCHE UND DAMIT HERGESTELLTER REIFEN
COMPOSITION DE CAOUTCHOUC POUR BANDE DE ROULEMENT DE PNEUMATIQUE ET PNEUMATIQUE FABRIQUÉ À L'AIDE DE CELLE-CI

(30) Priority: 20.08.2018 KR 20180096497
(43) Date of publication of application: 26.02.2020
(73) Proprietor: HANKOOK TIRE & TECHNOLOGY CO., LTD, Gangnam-gu Seoul 06133 (KR)
(72) Inventor: Jung, Jaehyun, 34127 Daejeon (KR); Park, Chulhee, 34073 Daejeon (KR); Kim, Hansol, 07214 Seoul (KR); Park, Hanki, 34119 Daejeon (KR); Lee, Hyungjae, 30098 Sejong-si (KR)
(74) Representative: Petraz, Gilberto Luigi

(56) References cited:
- EP-A1- 2 743 298
- KR-A- 20130 074 499

## Description

### [Technical Field]

The present invention relates to a rubber composition for tire tread which is capable of improving the handling and braking performances of a tire on a wet road surface and an icy/snowy road surface and maintaining the improved braking performance for a long period of time.

### [Background Art]

The handling and braking performance on a wet road surface and an icy/snowy road surface required for safety driving during winter season is a trade-off which is difficult to improve at the same time.

For the improvement of the handling and braking performance on a snow-covered road surface and on an icy snow road, it is important for the tire tread to have an appropriate level of hardness and a dynamic modulus. To this end, methods such as increasing the silica content therein or adding a relatively large amount of processing oil therein have been applied. A known rubber composition for tire is described for example in the document KR-A-20130074499.

However, when the silica content is increased, the handling and braking performance on a wet road surface is improved, but the hardness of the tread rubber tends to increase, whereas when the processing oil is used in an excess amount, the performance on the icy/snowy road surface is improved but the performance on a wet road surface tends to decrease. In addition, as the amount of the processing oil increases, it is effective to improve the performance on the icy/snowy road surface, but part of the processing oil leaks out while driving and thus the performance tends to deteriorate.

Accordingly, there is a need for research on the methods which can improve the braking performance on a wet road surface while minimizing the deterioration in the braking performance on a wet road surface.

### [Disclosure]

### [Technical Problem]

An object of the present invention is to provide a rubber composition for tire tread which can improve the braking performance on a wet road surface and an icy/snowy road surface.

Another object of the present invention is to provide a tire manufactured using the rubber composition for tire tread.

Still another object of the present invention is to provide a tire which can maintain the improved braking performance for a long period of time.

### [Technical Solution]

The present invention provides a rubber composition for tire tread, which includes 100 parts by weight of raw rubber; 20-180 parts by weight of a reinforcing filler, which includes low specific surface area silica having a CTAB adsorption specific surface area of 65 m²/g to 90 m²/g; and 2-50 parts by weight of a liquid polymer, which has a glass transition temperature of -110°C to -70°C and has a weight average molecular weight of 3,000 g/mol to 100,000 g/mol.

The raw rubber may include 20-90 wt% of natural rubber, 5-50 wt% of styrene butadiene rubber having a glass transition temperature of -110°C to - 50°C, and 5-50 wt% of polybutadiene rubber.

The styrene butadiene rubber may include, at an end thereof or at the main chain, any one functional group selected from the group consisting of a silane group, an amine group, and both of a silane group and an amine group.

The reinforcing filler may include 20-100 wt% of low specific surface area silica and 0-80 wt% of carbon black.

The liquid polymer may be a copolymer of any one butadiene selected from the group consisting of acrylonitrile butadiene, styrene butadiene, butadiene, parnesene, and a combination thereof.

The rubber composition for tire tread may further include 2-50 parts by weight
of processed oil, which is selected from the group consisting of TDAE oil, naphthenic oil, MES oil, soybean oil, modified soybean oil, sunflower oil, modified sunflower oil, canola oil, modified canola oil, rapeseed oil, modified rapeseed oil, and a combination thereof, relative to 100 parts by weight of raw rubber.

The present invention also provides a winter tire manufactured using the rubber composition for tire tread.

### [Advantageous Effects]

The present invention can provide a rubber composition for tire tread which can improve the braking performance of a tire on a wet road surface and on an icy/snowy road surface.

The present invention can also provide a tire manufactured using the rubber composition for tire tread.

The present invention can also provide a technique which can maintain the improved braking performance for a long period of time.

### [Mode for Invention]

Hereinafter, the present invention will be described in more detail.

The rubber composition for tire tread according to the present invention includes 100 parts by weight of raw rubber; 20-180 parts by weight of a reinforcing filler, which includes low specific surface area silica having a CTAB adsorption specific surface area of 65 m²/g to 90 m²/g; 2-50 parts by weight of a liquid polymer, which has a glass transition temperature of -110°C to -70°C and has a weight average molecular weight of 3,000 g/mol to 100,000 g/mol; and 2-50 parts by weight of processing oil.

In the rubber composition for tire tread, the raw rubber may include natural rubber, styrene butadiene rubber, and polybutadiene rubber.

The natural rubber may be general natural rubber or modified natural rubber. As the general natural rubber, any known natural rubber may be used, but the product of origin, *etc.* are not limited. The natural rubber includes cis-1,4-polyisoprene as a main component, but it may also include *trans*-1,4-polyisoprene depending on the required characteristics. Accordingly, the natural rubber may also include natural rubber, which includes *trans*-1,4-isoprene as a main component (*e.g.,* balata, a kind of rubber produced from the *Sapotaceae* family in South America), in addition to the natural rubber includes cis-1,4-polyisoprene as a main component.

The natural rubber may be contained in an amount of 20-90 wt% relative to the total weight of the raw rubber. When the natural rubber is contained less than 20 wt%, the tread block rigidity may be deteriorated due to the deterioration of modulus, whereas when the natural rubber is contained greater than 90 wt%, the braking performance on a wet road surface may be deteriorated.

The styrene butadiene rubber used simultaneously preferably has a glass transition temperature (T_{g}) of -110°C to -50°C. When the glass transition temperature of the solution-polymerized styrene butadiene rubber is lower than -110°C, the braking performance on a wet road surface may be deteriorated, whereas when the glass transition temperature is higher than -50°C, the braking performance on an icy/snowy road surface braking performance may be deteriorated. When the above particular solution-polymerized styrene butadiene rubber is used, it is possible to have an appropriate glass transition temperature thus being capable of improving the braking and handling performance.

More preferably, the styrene butadiene rubber may be a functionalized styrene butadiene rubber (SBR), which includes, at an end thereof or at the main chain, any one functional group selected from the group consisting of a silane group, an amine group, and both of a silane group and an amine group.

Specifically, a representative example of the styrene butadiene rubber including a silane group may be the functionalized styrene butadiene rubber disclosed in WO-A-2007/047943, and a representative example of styrene butadiene rubber including an amine group may be the functionalized styrene butadiene rubber disclosed in US-B-6,936,669.

The functionalized styrene butadiene rubber can promote an interaction between raw rubber and a reinforcing filler in a given rubber composition.

The solution-polymerized styrene butadiene rubber may be used in an amount of 5-50 wt% relative to the total amount of the raw rubber. When the solution-polymerized styrene butadiene rubber is used in an amount outside the above range, both the effect of the braking performance on a wet road surface and an icy/snowy road surface and the effect of reducing rotational resistance may be reduced.

Another raw material rubber used is the polybutadiene rubber, and the butadiene rubber may be contained in an amount of 5-50 wt% relative to the total weight of the raw rubber. When the amount of the butadiene rubber is less than 10 wt%, the braking performance on the icy/snowy road surface may be deteriorated, whereas when the amount of the butadiene rubber is contained greater than 50 wt%, the surface braking performance on a wet road surface may be deteriorated.

The rubber composition for tire tread according to the present invention, which is a reinforcing filler, is characterized by containing low specific surface area silica. The silica with a low specific surface area has the effect of reducing the modulus of the rubber composition in a low-temperature region thereby improving the performance on an icy/snowy road surface. Examples of the silica include specifically cetyltrimethyl ammonium bromide (CTAB) which has the adsorption specific surface area of 65 m²/g to 90m²/g. When the CTAB adsorption specific surface area is lower than 60 m²/g, there may be a problem in that abrasion resistance is decreased, whereas when the CTAB adsorption specific surface area is greater than 150 m²/g, there may be a problem in that the braking on an icy/snowy road surface and the handling performance may deteriorate.

As the reinforcing filler, silica and carbon black may be used by mixing. Specifically, the reinforcing filler may include 20-100 wt% of low specific surface area silica and 0-80 wt% of carbon black. The carbon black may have a CTAB surface area of 10 m²/g to 50 m²/g, but is not limited thereto.

Representative examples of the carbon black may include N110, N121, N134, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990, N991, *etc.,* and furnace black (furnace carbon black) (e.g., SAF, ISAF, HAF, MAF, FEF, SRF, GPF, APF, FF, CF, SCF, and ECF); acetylene black (acetylene carbon black); thermal black (thermal carbon black) (*e.g.,* EPC, MPC, and CC); graphite, *etc.* These may be used alone or in combination of two or more thereof.

A coupling agent may be further added to improve the dispersibility of the silica. As the coupling agent, any one selected from the group consisting of a sulfide-based silane compound, a mercapto-based silane compound, a vinyl-based silane compound, an amino-based silane compound, a glycidoxy-based silane compound, a nitro-based silane compound, a chloro-based silane compound, a methacryl-based silane compound, and a combination thereof, and preferably, a sulfide-based silane compound may be used.

The sulfide-based silane compound may be any one selected from the group consisting of bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-*N*,*N-*dimethylthiocarbamoyltetrasulfide, 3-triethoxysilylpropyl-*N,N-*dimethylthiocarbamoyltetrasulfide, 2-triethoxysilylethyl-*N*,*N-*dimethylthiocarbamoyltetrasulfide, 2-trimethoxysilylethyl-*N*,*N-*dimethylthiocarbamoyltetrasulfide, 3-trimethoxysilylpropylbenzothiazolyltetrasulfide, 3-triethoxysilylpropylbenzothiazole tetrasulfide, 3-trimethoxysilylpropylmethacrylatemonosulfide, 3-trimethoxysilylpropylmethacrylatemonosulfide, and a combination thereof.

The mercapto silane-based compound compound may be any one selected from the group consisting of 3-mercaptopropyltrimethoxysilane, 3-mercaptopropyltriethoxysilane, 2-mercaptoethyltrimethoxysilane, 2-mercaptoethyltriethoxysilane, and a combination thereof. The vinyl-based silane compound may be any one selected from the group consisting of ethoxysilane, vinyl trimethoxy silane, and a combination thereof. The amino-based silane compound may be any one selected from the group consisting of 3-aminopropyltriethoxysilane, 3-aminopropyltrimethoxysilane, 3-(2aminoethyl) aminopropyltriethoxysilane, 3-(2-aminoethyl)aminopropyltrimethoxysilane, and a combination thereof.

The glycidoxy-based silane compound may be any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane, and a combination thereof. The nitro-based silane compound may be any one selected from the group consisting of 3-nitropropyltrimethoxysilane, 3-nitropropyltriethoxysilane, and a combination thereof. The chloro-based silane compound may be any one selected from the group consisting of 3-chloropropyltrimethoxysilane, 3-chloropropyltriethoxysilane, 2-chloroethyltrimethoxysilane, 2-chloroethyltriethoxysilane, and a combination thereof.

The methacryl-based silane compound may be any one selected from the group consisting of *γ*-methacryloxypropyl trimethoxysilane, *γ-*methacryloxypropyl methyldimethoxysilane, *γ*-methacryloxypropyl dimethyl-methoxysilane, and a combination thereof.

The coupling agent may be contained in an amount of 1-20 parts by weight relative to 100 parts by weight of raw rubber. When the amount of the coupling agent is less than 1 part by weight, the improvement of silica dispersibility may be insufficient and the processability of the rubber may be deteriorated or the fuel economy may be deteriorated, whereas when the amount of the coupling agent is greater than 20 parts by weight, the interaction between silica and rubber becomes too strong, and thus the fuel economy may be excellent but the braking performance may be significantly deteriorated.

The rubber composition for tire tread may further include a liquid polymer. The liquid polymer is a rubber which exhibits a very high viscosity, unlike solid-type common polymers, and is in fluidity. The liquid polymer has a glass transition temperature (T_{g}) and is involved in a vulcanization reaction but the liquid polymer can also act as a plasticizer in the rubber composition. The liquid polymer with such physical properties is a material suitable for winter tires because it has the effect of improving the softness of a rubber composition. The liquid polymer may have a weight average molecular weight in the range of 3,000 g/mol 100,000 g/mol. When the weight average molecular weight is lower than 3,000 g/mol, a phenomenon in which the liquid polymer is being lost (bleeding and migration), whereas when the weight average molecular weight is greater than 100,000 g/mol, there is a possibility that the handling and braking performance on an icy/snowy road surface may be deteriorated due to a decrease in the movement of the molecules in the liquid polymer.

In the case of processing oil or a plasticizer, they have a low molecular weight and thus the phenomenon of bleeding and migration of oil may easily occur thereby deteriorating the physical properties of the rubber. In contrast, the liquid polymer according to the present invention has a relatively high molecular weight and establishes a binding with raw rubber thus preventing the oil loss phenomenon, and since the liquid polymer according to the present invention is advantageous in forming a network, it is expected to have an effect of improving the reinforcing property. In addition, the liquid polymer according to the present invention may play a role of lowering the G' value of the low temperature region by increasing the cross-linking density while performing a role of a plasticizer between rubbers. When the G' value becomes small, the softness of the rubber composition increases and can have a wide ground-contacting area on a snowy or icy road.

Conclusively, the application of the liquid polymer within the above range can provide the liquid polymer with the role of processed oil and thereby the liquid polymer can improve winter performance and processability without reducing other physical properties. The liquid polymer may be a copolymer of any one butadiene selected from the group consisting of acrylonitrile butadiene, styrene butadiene, butadiene, parnesene, and a combination thereof. More specifically, the liquid polymer may be represented by Formula 1 below: 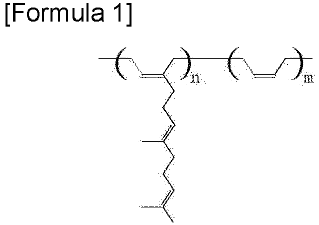 (wherein n is 45 to 65, and m is 31 to 51).

The liquid polymer may be contained in an amount of 2-50 parts by weight, and more preferably 5-30 parts by weight, relative to 100 parts by weight of raw rubber. When the liquid polymer is contained less than 2 parts by weight, there may arise a problem in that the elasticity maintenance effect due to curing with raw rubber may be deteriorated, whereas when the liquid polymer is contained greater than 50 parts by weight, the handling performance on a wet road surface may be deteriorated.

When low specific surface area silica and a liquid polymer are used in combination, it is possible to maximize the braking performance on a low friction road surface compared to when the low specific surface area silica is used alone. Since the effect of a liquid polymer having a glass transition temperature lower than those of common processing oils is added, in addition to the G' in the low temperature region which is lowered due to the use of the low specific surface area silica, there are effects in that the braking and handling performance on an icy/snowy road surface can be maximized, and even on a wet road surface with low friction coefficient among the wet road surfaces, adhesion can be improved, thus capable of improving braking and handling performance.

The rubber composition for tire tread may further include a softening agent such as processing oils to provide the rubber with plasticity so as to facilitate processing or so as to reduce the hardness of the vulcanized rubber. As the processing oil, any one selected from the group consisting of petroleum oils, vegetable oils, and a combination thereof, but the present invention is not limited thereto.

The processing oil may preferably be used in an amount of 2-50 parts by weight relative to 100 parts by weight of raw rubber. When the processing oil is contained less than 2 parts by weight, there may be a problem in that processability is deteriorated, whereas when the processing oil is contained greater than 50 parts by weight, there may be a problem in that the braking performance on a wet road surface may be deteriorated.

As the petroleum oil, any one selected from the group consisting of paraffinic oils, naphthenic oils, aromatic oils, and a combination thereof may be used.

As a representative example of the paraffinic oil, P-1, P-2, P-3, P-4, P-5, P-6, *etc.* of Mychang Oil Ind. Co., Ltd. may be used; as a representative example of the naphthenic oil, N-1, N-2, N-3, *etc.* of Mychang Oil Ind. Co., Ltd. may be used; and as a representative example of the aromatic oil, A-2, A-3, *etc.* of Mychang Oil Ind. Co., Ltd. may be used.

However, with the recent increase of the environmental awareness, it is known that when the content of the polycyclic aromatic hydrocarbons (hereinafter PAHs) contained in the aromatic oil is 3 wt% or more, cancer is highly likely to occur, and thus it is preferred that treated distillate aromatic extract (TDAE) oil, mild extraction solvate (MES) oil, residual aromatic extract (RAE) oil, or heavy naphthenic oil be used.

In particular, as the oil used as the softening agent, the TDAE oil, in which relative to the total amount of the oil, the PAHs is contained 3 wt% or less, a kinematic viscosity is 95 or more (210°F SUS), the aromatic component in the softening agent is contained 15-25 wt%, the naphthenic component is contained 27-37 wt%, and the paraffin component is contained 38-58 wt%, may be used.

The TDAE oil has advantageous characteristics with regard to environmental factors (*e.g.,* cancer-causing possibility, *etc.*) over PAHs while exhibiting excellent low temperature characteristics and fuel efficiency of tire tread including TDAE oil.

The vegetable oil may be any one selected from the group consisting of soybean oil, modified soybean oil, sunflower oil, modified sunflower oil, canola oil, modified canola oil, rapeseed oil, modified rapeseed oil, and a combination thereof. A rubber composition for tire tread is expected to improve the braking performance on an icy/snowy road surface by including silica with low specific surface area, however, the rubber composition may have a problem in that the braking performance on a wet road surface may not be improved or deteriorated. To solve these problems, the rubber composition for tire tread according to the present invention may further include a vegetable oil. The vegetable oil may be used by mixing with a different processing oil. The rubber composition for tire tread can maximize the handling and braking performance on an icy/snowy road surface and minimize deterioration in the braking performance on a wet road surface by using the low specific surface area silica and the vegetable oil in combination.

The vegetable oil may be oil components extracted from one or more materials selected from soybean, sunflower, canola, rapeseed, *etc.,* using a pressing method or a solvent extraction method.

First, the pressing method may include a washing step, a drying step, a milking step, an aging step, and a precipitation step. The drying step may be to a step to rinse the selected materials followed by drying by a suction ventilation drying method at a low heat of 50°C to 70°C for 2 to 3 hours. The milking step may be a step in which the dried materials are extracted at a temperature between 80°C and 90°C using a conventional compressor or expeller machine. The aging step and the precipitation step may be steps in which the oil extracted through the milking step is aged at room temperature for 7-10 days, and at the same time, impurities are precipitated and removed thereby capable of separating only the pure oil. Next, the solvent extraction method may be a method in which an organic solvent (*e.g.,* hexane, alcohol, acetone, benzene, chloromethane, ether, *etc.)* may be used. The method may be one in which soybeans are immersed in the above organic solvent and the oil components are extracted therefrom and only the oil is separated.

The rubber composition for tire tread may optionally further include various kinds of additives (*e.g.,* additional pressure-sensitive adhesives, vulcanizing agents, vulcanization accelerators, anti-aging agents, *etc.*). As the various kinds of additives, any additive commonly used in the art may be used, and the amount of the additive to be used complies with the mixing ratio used in the conventional rubber compositions for tire tread and is not particularly limited.

The additive can improve the tack performance between rubbers and contribute to the improvement of the physical properties of the rubber by enhancing the miscibility, dispersibility, and processability of other additives such as fillers.

As the additive, a natural resin-based adhesive (*e.g.,* rosin-based resin and terpene-based resin) and a synthetic resin-based adhesive (*e.g.,* petroleum resin, coal tar, alkyl phenol-based resin, *etc.*) may be used.

The rosin-based resin may be any one selected from the group consisting of rosin resins, rosin ester resins, hydrogenated rosin ester resins, a derivative thereof, and a combination thereof. The terpene-based resin may be any one selected from the group consisting of terpene resins, terpene phenol resins, and a combination thereof.

The petroleum resin may be any one selected from the group consisting of aliphatic resins, acid-modified aliphatic resins, alicyclic resins, hydrogenated alicyclic resins, aromatic (C9) resins, hydrogenated aromatic resins, C5-C9 copolymer resins, styrene resins, styrene copolymer resins, and a combination thereof.

The coal tar may be a coumarone-indene resin.

The alkyl phenol resin may be a *p-tert*-alkylphenol formaldehyde resin, and the *p-tert*-alkylphenol formaldehyde resin may be any one selected from the group consisting of a *p-tert*-butyl-phenol formaldehyde resin, a *p-tert*-octylphenol formaldehyde resin, and a combination thereof.

The additive may be contained in an amount of 0.5-10 parts by weight relative to 100 parts by weight of raw rubber. When the amount of the additive is less than 0.5 parts by weight relative to 100 parts by weight of raw rubber, the adhesive function is deteriorated, whereas when the amount of the additive is greater than 10 parts by weight relative to 100 parts by weight of raw rubber, the physical properties of the rubber may be deteriorated and is thus not preferable.

As the vulcanizing agent, a metal oxide (*e.g.,* a sulfur vulcanizing agent, an organic peroxide, a resin vulcanizing agent, a magnesium oxide, *etc.)* may be used.

As the sulfur vulcanizing agent, an inorganic vulcanizing agent (*e.g.,* powder sulfur (S), insoluble sulfur (S), precipitated sulfur (S), colloidal sulfur, *etc*.) and an organic vulcanizing agent (*e.g.,* tetramethylthiuram disulfide (TMTD), tetraethylthiuram disulfide (TETD), and dithiodimorpholine, *etc.*) may be used. As the sulfur vulcanizing agent, specifically, the atom sulfur or a sulfur vulcanizing agent (*e.g.,* amine disulfide, polymer sulfur, *etc.*) may be used.

As the organic peroxide, any one selected from the group consisting of benzoyl peroxide, dicumyl peroxide, di-*t*-butyl peroxide, *t*-butyl cumyl peroxide, methyl ethyl ketone peroxide, cumene hydroperoxide, 2,5-dimethyl-2,5-di(*t-*butylperoxy)hexane, 2,5-dimethyl-2,5-di(benzoylperoxy)hexane, 1,3-bis (*t-*butylperoxypropyl)benzene, di-*t*-butylperoxy-diisopropylbenzene, *t-*butylperoxybenzene, 2,4-dichlorobenzoyl peroxide, 1,1-dibutylperoxy-3,3,5-trimethylsiloxane, *n*-butyl-4,4-di-*t*-butylperoxyvalerate, and a combination thereof may be used.

It is preferable that the vulcanizing agent be contained in an amount of 1.5-2.5 parts by weight relative to 100 parts by weight of the raw rubber as an appropriate vulcanizing effect in that the raw rubber becomes less sensitive to heat and is chemically more stable.

The vulcanization accelerator refers to an accelerator that accelerates the vulcanization rate or accelerates the retarding action at the initial vulcanization step.

As the vulcanization accelerator, any one selected from the group consisting of sulfenamide-based, thiazole-based, thiuram-based, thiourea-based, guanidine-based, dithiocarbamate-based, aldehyde-amine-based, aldehyde-ammonia-based, imidazoline-based, xanthate-based vulcanization accelerators, and a combination thereof may be used.

As the sulfenamide-based vulcanization accelerator, for example, any one sulfenamide-based compound selected from the group consisting of *N-*cyclohexyl-2-benzothiazyl sulfenamide (CBS), *N-tert*-butyl-2-benzothiazyl sulfenamide (TBBS), *N*,*N*-dicyclohexyl-2-benzothiazyl sulfenamide, *N-*oxydiethylene-2-benzothiazyl sulfenamide, *N*,*N*-diisopropyl-2-benzothiazole sulfenamide, and a combination thereof may be used.

As the thiazole-based vulcanization accelerator, for example, any one thiazole-based compound selected from the group consisting of 2-mercaptobenzothiazole (MBT), dibenzothiazyl disulfide (MBTS), a sodium salt of MBT, a zinc salt of MBT, a copper salt of MBT, a cyclohexylamine salt of MBT, 2-(2,4-dinitrophenyl)mercaptobenzothiazole, 2-(2,6-diethyl-4-morpholinothio) benzothiazole, and a combination thereof may be used.

As the thiuram-based vulcanization accelerator, for example, any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and a combination thereof may be used.

As the thiourea-based vulcanization accelerator, for example, any one thiourea-based compound selected from the group consisting of thiocarbamide, diethylthiourea, dibutylthiourea, trimethylthiourea, diorthotolylthiourea, and a combination thereof may be used.

As the guanidine-based vulcanization accelerator, for example, any one guanidine-based compound selected from the group consisting of diphenylguanidine, diorthotolylguanidine, triphenylguanidine, orthotolylbiguanide, diphenylguanidine phthalate, and a combination thereof may be used.

As the dithiocarbamate-based vulcanization accelerator, for example, any one dithiocarbamate-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecyl isopropyl dithiocarbamate, zinc dibenzyldithiocarbamate, sodium diethyldithiocarbamate, pentamethylene dithiocarbamate piperidine, selenium dimethyldithiocarbamate, tellurium diethyldithiocarbamate, cadmium diamyldithiocarbamate, and a combination thereof may be used.

As the aldehyde-ammonia-based or aldehyde-ammonia-based vulcanization accelerator, for example, any one aldehyde-ammonia-based compound or aldehyde-ammonia-based selected from the group consisting of an acetaldehyde-aniline reactant, a butylaldehyde-aniline condensate, hexamethylenetetramine, an acetaldehyde-ammonia reactant, and a combination thereof may be used.

As the imidazoline-based vulcanization accelerator, for example, an imidazoline-based compound such as 2-mercaptoimidazoline may be used; and as the xanthate-based vulcanization accelerator, for example, zinc dibutylxanthogenate may be used.

To improve productivity and maximize physical properties of rubber via acceleration of the vulcanization speed, the vulcanization accelerator may be contained in an amount of 0.5-2.5 parts by weight relative to 100 parts by weight of the raw rubber.

The vulcanization accelerating adjuvant is a compounding agent used together with the vulcanization accelerator so as to complete the acceleration effect, and any one selected from the group consisting of an inorganic vulcanization accelerating adjuvant, an organic vulcanization accelerating adjuvant, and a combination thereof may be used.

As the inorganic vulcanization accelerating adjuvant, any one selected from the group consisting of zinc oxide (ZnO), zinc carbonate, magnesium oxide (MgO), lead oxide, potassium hydroxide, and a combination thereof may be used. As the inorganic vulcanization accelerating adjuvant, any one selected from the group consisting of stearic acid, zinc stearate, palmitic acid, linoleic acid, oleic acid, lauric acid, dibutyl ammonium oleate, a derivative thereof, and a combination thereof may be used.

In particular, as the vulcanization accelerating adjuvant, the zinc oxide and the stearic acid may be used together, and in this case, the zinc oxide is dissolved in the stearic acid and forms an effective complex with the vulcanization accelerator and produces a freed sulfur during the vulcanization reaction, thereby facilitating the crosslinking reaction between rubbers.

When the zinc oxide and the stearic acid are used together, to be serves as an appropriate accelerator, each of the zinc oxide and the stearic acid may be used in an amount of 1-5 parts by weight and 0.5-3 parts by weight relative to 100 parts by weight of the raw rubber. When the amount of each of the zinc oxide and the stearic acid is less than the lower limit of the above range, the vulcanization speed may be low thus deteriorating productivity, whereas when each of the zinc oxide and the stearic acid is greater than the higher limit of the above range, a scorch phenomenon may occur thereby deteriorating physical properties.

The anti-aging agent is an additive used to stop the chain reaction in which the tire is autoxidized by oxygen. As the anti-aging agent, any one selected from the group consisting of amine-based, phenol-based, quinoline-based, imidazole-based, carbamate metal salts, a wax, and a combination thereof may be appropriately selected and used.

As the amine-based anti-aging agent, any one selected from the group consisting of *N*'-phenyl-*N*"-(1,3-dimethyl)-p-phenylenediamine, *N*-(1,3-dimethylbutyl)-*N*"-phenyl-p-phenylenediamine, *N*'-phenyl-*N*"-isopropyl-*p-*phenylenediamine, *N*,*N*'-diphenyl-p-phenylenediamine, *N*,*N*'-diaryl-*p-*phenylenediamine, *N*-phenyl-*N*'-cyclohexyl-p-phenylenediamine, *N*-phenyl-*N*'-octyl-*p*-phenylenediamine, and a combination thereof may be used. As the phenol-based anti-aging agent, any one selected from the group consisting of 2,2'-methylene-bis (4-methyl-6-*tert*-butylphenol), 2,2'-isobutylidene-bis(4,6-dimethylphenol), 2,6-di-*t*-butyl-*p*-cresol, and a combination thereof, which are phenol-based, may be used. As the quinoline-based anti-aging agent, 2,2,4-trimethyl-1,2-dihydroquinoline and a derivative thereof may be used, and specifically, any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and a combination thereof may be used. As the wax, preferably, waxy hydrocarbon may be used.

Considering that the anti-aging agent must have high solubility in rubber, have low volatility, be inert to rubber, should not inhibit vulcanization, *etc.,* in addition to the anti-aging agent action, the anti-aging agent may be contained in an amount of 1-10 parts by weight relative to 100 parts by weight of the raw rubber.

The rubber composition for tire tread may be manufactured through a conventional two-step continuous manufacturing process. That is, the rubber composition for tire tread may be manufactured in an appropriate mixer through a first step of a thermomechanical treatment or kneading at the highest temperature of 110°C to 190°C, preferably at a high temperature of 130°C to 180°C (called a "non-production" step), and a second step of conventional mechanical treatment at a low temperature of below 100°C (*e.g.,* 40°C to 100°C) during the finishing step, in which a crosslinking system is mixed (called a "production" step), but the present invention is not limited thereto.

The rubber composition for tire tread is not limited to treads (tread caps and tread bases) but may be included in various rubber components that constitute the tire. Examples of the rubber components may include sidewalls, sidewall inserts, apexes, chafers, wire coats, inner liners, *etc.*

A tire according to another embodiment of the present invention may be manufactured using the rubber composition for tire tread. As the method for manufacturing a tire using the rubber composition for tire tread, any method conventionally used for manufacturing tires may be applied, and a detailed description thereof will be omitted herein.

The tire may be a passenger vehicle tire, a car race tire, an airplane tire, an agricultural vehicle tire, an off-the-road tire, a truck tire, a bus tire, *etc.* In addition, the tire may be used as a radial tire or a bias tire.

Hereinafter, Examples of the present invention will be described in detail so that a person skilled in the art can readily implement the present invention. However, the present invention may be embodied in many different forms and is not limited to the Example described herein.

### [Preparation Example 1: Manufacture of rubber composition for tread]

Rubber compositions for tire tread according to the following Examples and Comparative Examples were prepared using the compositions shown in Table 1 below. The rubber compositions were prepared according to the conventional methods of preparing the rubber compositions.

**[Table1]**

| | | Comp. Ex. 1 | Comp. Ex. 2 | Comp. Ex. 3 | Comp. Ex. 4 | Ex. 1 | Ex. 2 |
|---|---|---|---|---|---|---|---|
| Raw Rubber | NR | 60 | 60 | 70 | 70 | 70 | 70 |
| | SBR | 20 | 20 | 20 | 20 | 20 | 20 |
| | BR | 20 | 20 | 10 | 10 | 10 | 10 |
| Silica | | 50 | 60 | 60 | - | - | - |
| Silica with Low Specific Surface Area | | - | - | - | 60 | 60 | 60 |
| Processing Oil | | 20 | 20 | 20 | 20 | 10 | - |
| Liquid Polymer | | - | - | - | - | 10 | 20 |
| Zinc Oxide | | 3 | 3 | 3 | 3 | 3 | 3 |
| Stearate | | 1 | 1 | 1 | 1 | 1 | 1 |
| Anti-aging agent | | 2 | 2 | 2 | 2 | 2 | 2 |
| Sulfur | | 1.5 | 1.5 | 1.5 | 1.5 | 1.5 | 1.5 |
| Accelerator | | 1 | 1 | 1 | 1 | 1 | 1 |

| | | | | | | | |
|---|---|---|---|---|---|---|---|
| (Unit: parts by weight) | | | | | | | |

- NR: natural rubber
- SBR: glass transition temperature -61°C, styrene butadiene rubber having a styrene content of 10% and a vinyl content of 36%
- BR: neodymium butadiene rubber (Nd-BR) having a glass transition temperature of -10°C
- silica: a silica where CTAB is in a range of153 m²/g to177 m²/g and a nitrogen adsorption value is in a range of 160 cm²/g to 190 cm²/g
- low specific surface area silica: a silica where CTAB is in a range of 65 m²/g to 90 m²/g and a nitrogen adsorption value is in a range of 70 cm²/g to 110 cm²/g
- processing oil: naphthenic Oil
- liquid polymer: liquid polybutadiene where the weight average molecular weight is 8,000 g/mol
- accelerator: CZ, N-cyclohexyl-2-benzothiazole sulfenamide (CBZ)

### [Experimental Example 1: Measurement of physical properties of prepared rubber composition]

The physical properties of the rubber samples prepared in the above Examples and Comparative Examples were measured and the results are shown in Table 2 below.

**[Table2]**

| | Comp. Ex. 1 | Comp. Ex. 2 | Comp. Ex. 3 | Comp. Ex. 4 | Ex. 1 | Ex. 2 |
|---|---|---|---|---|---|---|
| Mooney Viscosity (On the Day of Mixing, 100°C) | 50 | 56 | 60 | 44 | 40 | 35 |
| Tₘₐₓ (160°C) | 17.5 | 17.9 | 18.5 | 16.6 | 16.1 | 16.3 |
| T90 (160°C) | 8.7 | 8.8 | 8.4 | 9.5 | 9.6 | 9.5 |
| Hardness (ShoreA) | 56 | 57 | 55 | 54 | 53 | 53 |
| 300% Modulus (kgf/cm²) | 64 | 68 | 72 | 83 | 81 | 82 |
| 0°C tanδ | 0.169 | 0.164 | 0.155 | 0.151 | 0.153 | 0.155 |
| -30°C G'(10E+6) | 13 | 14 | 15 | 8 | 7 | 6 |
| After Aging -30°C G'(10E+6) | 18 | 19 | 20 | 11 | 9 | 8 |
| After Compression At -30°C G'(10E+6) | 22 | 24 | 25 | 13 | 10 | 9 |
| 60°C tanδ | 0.114 | 0.124 | 0.128 | 0.068 | 0.07 | 0.071 |

- Mooney viscosity (ML₁₊₄(100°C)): measured by ASTM Standard D1646. The Mooney viscosity is a value representing the viscosity of unvulcanized rubber. As the Mooney viscosity becomes small, the processability of the unvulcanized rubber becomes excellent.
- hardness (ShoreA): measured by DIN 53505
- 300% modulus (kgf/cm²): measured by ISO 37 Standard
- 0°C tanδ, -30°C G'(10E+6), -60°C tanδ: to measure the viscoelastic properties of the prepared samples, the samples were measured under a frequency of 10 Hz at 0.5% strain using an ARES meter. The aging was carried out at 100°C for 48 hours. The compression test was carried out for 20 days while holding the samples (15 cm × 15 cm: thickness (2 mm)) with a weight of 1 kg.

0°C tanδ represents the braking characteristic on a dry road surface or a wet road surface, and as the value becomes greater, the braking performance becomes excellent. -30°C G' represents the braking characteristic on an icy/snowy road surface, and as the value becomes smaller, the braking performance becomes excellent. In addition, -60°C tanδ represents the rotational resistance characteristic, and as the value becomes smaller, the performance becomes excellent.

From the results of Table 2, in Examples 1 and 2 where the combination of low specific surface area silica and a liquid polymer are applied, the -30°C dynamic modulus G' was reduced and thus it was expected that the performance on an icy/snowy road surface could be improved.

In Examples 1 and 2, 0°C tanδ was increased compared to that in Comparative Example 4, and thus it was expected that the performance on a wet road surface could be improved.

In particular, in Example 2, 0°C tanδ showed a relative increase while showing the lowest value in the -30°C dynamic modulus G' and thus it was expected that the braking performance on a wet road surface and on an icy/snowy road surface could be improved, and in addition, from the result that the increase gap of -30°C dynamic modulus G' was small after aging and compression, it was expected that the duration of tire performance was excellent.

In Comparative Examples 3 and 4 and Examples 1 and 2 where the NR content in raw rubber is high, the modulus was higher than those in Comparative Examples 1 and 2, and thus block rigidity of tire phase could be increased thus being advantageous in improving handling performance.

### [Experimental Example 2: Evaluation of braking performance of tire using rubber composition for tread]

A tread was made using the rubbers of Comparative Examples and Examples described above tires of 205/55R16 standard including the tread rubber as a semi-finished product were manufactured, and the relative ratio of the braking distance performance of these tires on a wet road surface and on an icy/snowy road surface, and the tire hardness after long hours of running are shown in Table 3. The relative ratio values have a significant impact on the improvement and reduction when these tires have a variation gap of 5% or more, that is, when the ratio is 95 or less, it is difficult to apply due to lack of performance, whereas when the ratio is 105 or higher, the effect of improving performance is at a significant level.

**[Table3]**

| | Comp. Ex. 1 | Comp. Ex. 2 | Comp. Ex. 3 | Comp. Ex. 4 | Ex. 1 | Ex. 2 |
|---|---|---|---|---|---|---|
| Braking Performance on Wet Road Surface | 100 | 103 | 102 | 107 | 108 | 110 |
| Braking Performance on Icy/Snowy Road Surface | 100 | 95 | 96 | 106 | 109 | 110 |
| Hardness | 56 | 57 | 55 | 54 | 53 | 53 |
| Hardness (after running 30,000 km) | 59 | 60 | 58 | 57 | 55 | 54 |

| | | | | | | |
|---|---|---|---|---|---|---|
| - Hardness (ShoreA): measured by DIN 53505. | | | | | | |

Reviewing Table 3 above, in Examples 1 and 2 where both low specific surface area silica and a liquid polymer are contained simultaneously, it was confirmed that the values of braking performance on an icy/snowy road surface were 105 or greater, and in particular, in Example 2 where a liquid polymer is contained in an amount of 20 parts by weight, it was confirmed that the braking performance on a wet road surface and the braking performance on an icy/snowy road surface were improved to a similar level.

In addition, in Comparative Examples 1 to 4, the hardness of tires increased significantly after 30,000 km of driving, but in Examples 1 and 2, the hardness difference was less than 2 thus showing no significant change.

## Claims

1. A rubber composition for tire tread, comprising:
100 parts by weight of raw rubber;
20-180 parts by weight of a reinforcing filler, which comprises low specific surface area silica having a CTAB adsorption specific surface area of 65 m²/g to 90 m²/g; and
2-50 parts by weight of a liquid polymer, which has a glass transition temperature of -110°C to -70°C and has a weight average molecular weight of 3,000 g/mol to 100,000 g/mol.

2. The rubber composition for tire tread of claim 1, wherein the raw rubber comprises 20-90 wt% of natural rubber, 5-50 wt% of styrene butadiene rubber having a glass transition temperature of -110°C to -50°C, and 5-50 wt% of polybutadiene rubber.

3. The rubber composition for tire tread of claim 2, wherein the styrene butadiene rubber comprises, at an end thereof or at the main chain, any one functional group selected from the group consisting of a silane group, an amine group, and both of a silane group and an amine group.

4. The rubber composition for tire tread of claim 1, wherein the reinforcing filler comprises 20-100 wt% of low specific surface area silica and 0-80 wt% of carbon black.

5. The rubber composition for tire tread of claim 1, wherein the liquid polymer is a copolymer of any one butadiene selected from the group consisting of acrylonitrile butadiene, styrene butadiene, butadiene, parnesene, and a combination thereof.

6. The rubber composition for tire tread of claim 1, wherein the rubber composition for tire tread further comprises 2-50 parts by weight of processed oil selected from the group consisting of TDAE oil, naphthenic oil, MES oil, soybean oil, modified soybean oil, sunflower oil, modified sunflower oil, canola oil, modified canola oil, rapeseed oil, modified rapeseed oil, and a combination thereof, relative to 100 parts by weight of raw rubber.

7. A winter tire manufactured using the rubber composition for tire tread according to any one of claims 1 to 6.

## Patentansprüche

1. Kautschukzusammensetzung für eine Reifenlauffläche, wobei die Zusammensetzung
100 Gewichtsteile eines Rohkautschuks,
20-180 Gewichtsteile eines Verstärkungsfüllstoffes, der Kieselsäure mit einem geringen spezifischen Oberflächenbereich mit einer CTAB-adsorptionsspezifischen Oberfläche von 65 m²/g bis 90 m²/g umfasst, und
2-50 Gewichtsteile eines flüssigen Polymers aufweist, das eine Glasübergangstemperatur von -110°C bis -70°C und ein bezüglich des Gewichts gemitteltes Molekulargewicht von 3.000 g/mol bis 100.000 g/mol aufweist.

2. Kautschukzusammensetzung für eine Reifenlauffläche nach Anspruch 1, wobei der Rohkautschuk 20-90 Gewichtsprozent von natürlichem Kautschuk, 5-50 Gewichtsprozent an Styrol-Butadien-Kautschuk mit einer Glasübergangstemperatur von -110°C bis -50°C und 5-50 Gewichtsprozent an Polybutadien-Kautschuk aufweist.

3. Kautschukzusammensetzung für eine Reifenlauffläche nach Anspruch 2, wobei der Styrol-Butadien-Kautschuk an einem Ende oder der Hauptkette eine beliebige funktionale Gruppe aufweist, die aus der aus einer Silan-Gruppe, aus einer Amin-Gruppe sowie aus sowohl einer Silan-Gruppe als auch aus einer Amin-Gruppe bestehenden Gruppe ausgewählt ist.

4. Kautschukzusammensetzung für eine Reifenlauffläche nach Anspruch 1, wobei der Verstärkungsfüllstoff 20-100 Gewichtsprozent Kieselsäure mit einem geringen spezifischen Oberflächenbereich und 0-80 Gewichtsprozent an Ruß aufweist.

5. Kautschukzusammensetzung für eine Reifenlauffläche nach Anspruch 1, wobei das flüssige Polymer ein Copolymer eines Butadiens ist, das aus der aus einem Acrylnitril-Butadien, einem Styrol-Butadien, einem Butadien, Parnesen und einer Kombination davon bestehenden Gruppe ausgewählt ist.

6. Kautschukzusammensetzung für eine Reifenlauffläche nach Anspruch 1, wobei die Kautschukzusammensetzung für eine Reifenlauffläche weiterhin 2-50 Gewichtsteile eines verarbeiteten Öls umfasst, das aus TDAE-Öl, Naphthenöl, MES-Öl, Sojaöl, modifiziertem Sojaöl, Sonnenblumenöl, modifiziertem Sonnenblumenöl, Rapsöl, modifiziertem Rapsöl, Rapssaatöl, modifiziertem Rapssaatöl und einer Kombination davon bestehenden Gruppe im Verhältnis zu 100 Gewichtsteile an Rohkautschuk aufweist.

7. Winterreifen, der unter Verwendung der Kautschukzusammensetzung für eine Reifenlauffläche nach einem der Ansprüche 1 bis 6 hergestellt ist.

## Revendications

1. Composition de caoutchouc pour bande de roulement de pneumatique, comprenant :
100 parties en poids de caoutchouc brut ;
de 20 à 180 parties en poids d'une charge renforçante, qui comprend de la silice à faible surface spécifique ayant une surface spécifique d'adsorption CTAB de 65 m²/g à 90 m²/g ; et
de 2 à 50 parties en poids d'un polymère liquide, qui a une température de transition vitreuse de -110 °C à -70 °C et un poids moléculaire moyen en poids de 3 000 g/mol à 100 000 g/mol.

2. Composition de caoutchouc pour bande de roulement de pneumatique selon la revendication 1, dans laquelle le caoutchouc brut comprend de 20 à 90 % en poids de caoutchouc naturel, de 5 à 50 % en poids de caoutchouc styrène-butadiène ayant une température de transition vitreuse de -110 °C à -50 °C, et de 5 à 50 % en poids de caoutchouc polybutadiène.

3. Composition de caoutchouc pour bande de roulement de pneumatique selon la revendication 2, dans laquelle le caoutchouc styrène-butadiène comprend, à une extrémité de celui-ci ou à la chaîne principale, un groupe fonctionnel quelconque choisi dans le groupe constitué d'un groupe silane, d'un groupe amine et à la fois d'un groupe silane et d'un groupe amine.

4. Composition de caoutchouc pour bande de roulement de pneumatique selon la revendication 1, dans laquelle la charge de renforcement comprend de 20 à 100 % en poids de silice à faible surface spécifique et de 0 à 80 % en poids de noir de carbone.

5. Composition de caoutchouc pour bande de roulement de pneumatique selon la revendication 1, dans laquelle le polymère liquide est un copolymère d'un butadiène quelconque choisi dans le groupe constitué d'un acrylonitrile butadiène, d'un styrène butadiène, d'un butadiène, d'un parnesène et d'une combinaison de ceux-ci.

6. Composition de caoutchouc pour bande de roulement de pneumatique selon la revendication 1, dans laquelle la composition de caoutchouc pour bande de roulement de pneumatique comprend en outre de 2 à 50 parties en poids d'huile traitée choisie dans le groupe constitué par l'huile TDAE, l'huile naphténique, l'huile solvant extrait doux (MES), l'huile de soja, l'huile de soja modifiée, l'huile de tournesol, l'huile de tournesol modifiée, l'huile de canola, l'huile de canola modifiée, l'huile de colza, l'huile de colza modifiée et une combinaison de celles-ci, par rapport à 100 parties en poids de caoutchouc brut.

7. Pneumatique d'hiver fabriqué en utilisant la composition de caoutchouc pour la bande de roulement de pneumatique selon l'une quelconque des revendications 1 à 6.
